# FASCICULE DE BREVET EUROPEEN

(11) **EP 4 452 711 B1**
(45) Date de publication et mention de la délivrance du brevet: **16.09.2026**
(21) Numéro de dépôt: 22847591.9
(22) Date de dépôt: 20.12.2022
(51) Int. Cl.: B60T 17/08, B60T 17/16, B60T 17/22, B61H 1/00, F16D 63/00

(54) **SYSTÈME DE FREINAGE FERROVIAIRE ET VÉHICULE FERROVIAIRE POURVU D'UN TEL SYSTÈME**
SCHIENENBREMSSYSTEM UND SCHIENENFAHRZEUG MIT EINEM SOLCHEN SYSTEM
RAILWAY BRAKING SYSTEM AND RAILWAY VEHICLE PROVIDED WITH SUCH A SYSTEM

(30) Priorité: 22.12.2021 FR 2114200
(43) Date de publication de la demande: 30.10.2024
(73) Titulaire: Wabtec Hauts-de-France, 80000 Amiens (FR)
(72) Inventeur: GONCALVES, Claudino, 80620 Ribeaucourt (FR); GERBER-PAPIN, Denis, 80830 L'Etoile (FR); BONHOMME, Guillaume, 80000 Amiens (FR); LEDOUX, Marc-Edouard, 80000 Amiens (FR)
(74) Mandataire: Santarelli
(86) Numéro de dépôt international: PCT/FR2022/052436
(87) Numéro de publication internationale: WO 2023/118727

(56) Documents cités:
- EP-A1- 2 154 040
- EP-A1- 2 982 556
- US-A- 3 955 480
- US-A- 3 977 304

## Description

### Domaine technique de l'invention

L'invention concerne le domaine des véhicules ferroviaires. Elle concerne plus particulièrement un système de freinage ferroviaire pour un véhicule ferroviaire.

L'invention concerne également un véhicule ferroviaire comportant un tel système.

Par exemple, le système de freinage ferroviaire peut comporter un cylindre de frein configuré pour agir sur des organes de freinage du véhicule, tel que par exemple des disques de frein ou directement sur les roues du véhicule.

### Etat de la technique

Les véhicules ferroviaires sont généralement équipés de cylindres freins comportant chacun un piston mobile sous l'effet d'un fluide sous pression, le déplacement de ce piston entraînant une action de freinage telle que le serrage d'un disque de frein entre deux patins, ou la pression directe d'un patin contre une roue du véhicule.

Ces cylindres de frein comportent également généralement un actionneur de parking qui est activé en cas de perte de pression du fluide sous pression, en cas de vidange volontaire ou de fuite du système pneumatique, et qui permet d'assurer le freinage grâce à la force d'un ou plusieurs ressorts se substituant à la force du fluide. Une fois cet actionneur activé, le frein reste serré en permanence, tandis que des actions de maintenance doivent le cas échéant être menées, par exemple pour identifier et supprimer la cause de la défaillance du circuit de fluide sous pression, ou bien pour procéder aux changement de garnitures.

Cependant, il peut être nécessaire, notamment pendant ces opérations de maintenance, de déplacer le véhicule ferroviaire dont l'actionneur a été activé, et il est pour cela nécessaire de déverrouiller l'actionneur.

On connaît du document EP 2 154 040 un dispositif d'actionnement pour frein de roue de véhicule, ce dispositif comportant des moyens de déclenchement permettant le verrouillage du frein lorsqu'une action telle que celles mentionnées ci- a eu lieu. En particulier, il s'agit d'un actionneur de frein de parking ou de secours adapté à verrouiller un cylindre de frein ferroviaire. Cet actionneur comporte un manchon de poussée adapté à agir sur ledit cylindre de frein, un coulisseau monté mobile axialement dans le manchon de poussée entre une position de verrouillage et une position de déverrouillage, un piston adapté à être entrainé par des moyens élastiques et lié à un organe d'accrochage, et une pluralité de billes disposées dans une ouverture du manchon entre le coulisseau et l'organe d'accrochage et commandées en position par une surface latérale du coulisseau. Lorsque le coulisseau est en position de verrouillage, les billes adoptent une position saillante vis-à-vis du manchon où elles sont engagées dans un renfoncement de l'organe d'accrochage, et lorsque le coulisseau est en position de déverrouillage, adoptent une position rétractée vis-à-vis du manchon où elles sont dégagées de l'organe d'accrochage. Lorsque le coulisseau est en position de verrouillage, l'organe d'accrochage entraîne axialement le manchon de poussée et lorsque le coulisseau est en position de déverrouillage, l'organe d'accrochage est axialement désaccouplé du manchon de poussée. La surface latérale du coulisseau comporte pour chaque bille un renfoncement de verrouillage respectif pour recevoir à engagement cette bille lorsque le coulisseau est en position de verrouillage, chaque renfoncement de verrouillage étant orienté axialement et présentant une section transversale en arc de cercle de rayon semblable à celui de la bille. Ainsi, la bille est en contact avec la surface du renfoncement de verrouillage sur une ligne en arc de cercle.

Dans le document EP 2 154 040, l'actionneur comporte en outre un dispositif de déverrouillage qui est adapté à repousser le coulisseau dans le manchon de poussée en comprimant un ressort disposé entre le coulisseau et le manchon de poussée. Le dispositif de déverrouillage est donc adapté à entrainer le coulisseau de sa position de verrouillage à sa position de déverrouillage. En particulier, un agent de maintenance souhaitant stopper l'effort de freinage exercé par l'actionneur en vue, par exemple, de déplacer le véhicule vers son lieu de maintenance, doit opérer le déverrouillage de l'actionneur grâce au dispositif de déverrouillage et par exemple, en tirant sur un câble de commande.

Dans le document EP 2 154 040, le dispositif de déverrouillage comporte un levier ayant une embase bombée et une tige s'étendant à partir de l'embase. L'embase bombée est disposée et maintenue entre le sommet du coulisseau et une butée annulaire dont le diamètre interne est légèrement inférieur à celui de l'embase bombée. Ce dispositif de déverrouillage comporte également des moyens d'actionnement du levier. Ces moyens comportent un fourreau qui enveloppe partiellement la tige et dont l'extrémité fermée est traversée par un tourillon transversal. Ce tourillon est relié à un ressort de rappel qui a tendance à ramener le fourreau et donc le levier dans l'axe du coulisseau. Les moyens d'actionnement comportent également une tige reliée au tourillon. Cette tige s'étend transversalement au coulisseau et peut être entraînée en translation suivant la direction grâce à un organe de commande externe tel qu'une poignée reliée au câble de commande.

Lorsqu'un agent de maintenance souhaite stopper l'effort de freinage exercé par l'actionneur, il lui suffit d'actionner l'organe de commande externe de sorte à déplacer la tige provoquant via le tourillon, le déplacement du fourreau et donc du levier. L'embase bombée du levier étant retenue contre la butée annulaire, le fourreau pivote autour du tourillon tandis que le levier coulisse dans ce fourreau et que l'embase bombée bascule de sorte qu'une partie de cette embase vient exercer un effort sur le sommet du coulisseau qui est repoussé dans sa position de déverrouillage. Autrement dit, l'enclenchement du dispositif de déverrouillage entraine le coulisseau vers sa position de déverrouillage. Chaque bille est alors poussée par l'organe d'accrochage et se rapproche ainsi de l'axe du coulisseau jusqu'à se trouver dans le renfoncement de déverrouillage correspondant à sa position rétractée. Le profil de chaque gorge permet de conserver durant tout le déplacement de la bille correspondante une ligne de contact bille/gorge en arc de cercle. Dès que les billes occupent leur position rétractée, l'organe d'accrochage devient axialement désaccouplé du manchon. N'ayant plus aucune prise sur les billes, l'organe d'accrochage coulisse alors axialement par rapport au manchon de poussée. Le piston vient alors en butée contre le corps tandis que le manchon de poussée est libre de coulisser le long de son axe longitudinal. Le piston du cylindre de frein remonte en position haute et le cylindre de frein est alors en position desserrée.

D'autres dispositifs d'actionnement sont connus des documents EP 2982556 A1, FR 2 473 440, EP 0 206 520 et BE 852 864.

### Exposé de l'invention

L'invention concerne un système de freinage ferroviaire ayant notamment un dispositif d'actionnement ainsi qu'un dispositif de déverrouillage du type de ceux décrits ci-dessus, qui soit simple, commode et économique tant dans sa fabrication que dans son utilisation.

L'invention a ainsi pour objet, sous un premier aspect, un système de freinage ferroviaire pour un véhicule ferroviaire, comportant un cylindre de frein configuré pour agir sur des organes de freinage du véhicule ferroviaire, un dispositif d'actionnement configuré pour verrouiller le cylindre de frein dans une position de freinage et un dispositif de déverrouillage configuré pour déverrouiller le dispositif d'actionnement par l'actionnement d'un mécanisme de commande, caractérisé en ce que le mécanisme de commande comporte un organe de commande mobile en translation selon une direction et logé dans un boîtier du dispositif de déverrouillage assujetti sur le cylindre de frein, l'organe de commande étant configuré pour coopérer avec le dispositif d'actionnement, et un organe de blocage monté mobile en translation selon une direction perpendiculaire à la direction de déplacement de l'organe de commande et logé dans le boîtier du dispositif de déverrouillage, le mécanisme de commande étant configuré de sorte, lorsque le dispositif d'actionnement est dans une position de verrouillage du cylindre de frein et que l'organe de commande est sollicité et déplacé vers une position de maintenance dans laquelle il est configuré pour faire passer le dispositif d'actionnement dans une position de déverrouillage, l'organe de blocage est sollicité et déplacé dans une position dans laquelle il bloque en position l'organe de commande.

Ainsi, lorsqu'un agent de maintenance qui a exercé un effort pour déplacer l'organe de commande en vue de déverrouiller le dispositif d'actionnement, relâche l'effort exercé, alors l'organe de commande reste en position de maintenance par l'effet de l'organe de blocage.

Le mécanisme de commande du système de freinage ferroviaire selon l'invention est particulièrement simple et compact en ce qu'il regroupe, dans le boîtier du dispositif de déverrouillage, à la fois l'organe de commande qui coopère avec le dispositif d'actionnement et l'organe de blocage qui coopère avec l'organe de commande.

Des caractéristiques préférées, simples, commodes et économiques du système de freinage ferroviaire selon l'invention sont présentées ci-après.

Le dispositif de déverrouillage comporte au moins une tige de commande assujettie par une extrémité à l'organe de commande et montée partiellement en saillie du boîtier de sorte à être sollicitée depuis l'extérieur du boîtier par exemple par une poignée et/ou un câble de commande.

L'organe de commande est formé par une chape montée mobile dans un espace ménagé dans un corps du boîtier, entre une position de sécurité, correspondant à un verrouillage du cylindre de frein, et une position de maintenance correspondant à un déverrouillage du cylindre de frein, avec la chape qui présente un orifice central configuré pour recevoir un levier du dispositif d'actionnement.

L'organe de blocage est formé par un verrou en forme de U logé dans un espace ménagé dans un corps du boîtier, avec le verrou qui présente une paroi de fond de laquelle saillent une première branche ayant à son extrémité libre un premier rebord pouvant être logé dans une première cavité ménagée dans le corps, et une deuxième branche s'étendant en regard de la première branche et ayant à son extrémité libre un second rebord pouvant être logé dans une seconde cavité ménagée dans le corps.

La chape et le verrou sont dimensionnés de sorte que la chape est reçue au moins partiellement dans un espace délimité entre les première et deuxième branches du verrou en U.

Le mécanisme de commande présente un module de pilotage pourvu d'un piston de pilotage s'étendant au moins partiellement dans le corps du boîtier, d'une chambre de pilotage alimentée en fluide sous pression par un orifice de pilotage ménagé dans le corps du boîtier et qui se trouve, d'une part en communication fluidique avec une gorge ménagée dans un corps du cylindre de frein et, d'autre part en communication fluidique avec la chambre de pilotage via une conduite de pilotage cheminant au moins dans le corps du boîtier.

Lorsque la chambre de pilotage est alimentée, le piston de pilotage est sollicité de sorte qu'il pousse le verrou pour que la chape puisse s'y loger, le premier rebord est logé dans la première cavité, et dans cette position de sécurité de la chape, le levier du dispositif d'actionnement est reçu partiellement dans un orifice central de la chape.

Lorsque la chambre de pilotage n'est plus alimentée et que la chape est entraînée en translation vers sa position de maintenance, elle sort de l'espace délimité entre les première et deuxième branches du verrou en U, lequel est libéré et entrainé en translation par le piston de pilotage lui-même sollicité par un organe de ressort et, dans cette position de maintenance, le premier rebord sort au moins partiellement de la première cavité pour venir se positionner sous la chape tandis que le deuxième rebord est logé dans la deuxième cavité, bloquant ainsi la chape en position.

Le piston de pilotage est assujetti mécaniquement à une extrémité à la deuxième branche du verrou et le module de pilotage présente en outre un organe de rappel monté autour du piston de pilotage et configuré pour le solliciter à distance de l'espace du corps, vers un capot externe du module de pilotage, lequel capot externe délimite avec le piston de pilotage la chambre de pilotage qui est alimentée en fluide sous pression.

Le mécanisme de commande présente un module de détection pourvu d'au moins un capteur logé dans le corps et configuré pour détecter la position de l'organe de commande et/ou de l'organe de blocage.

Le boîtier est ici réalisé en matière plastique. En variante, le boîtier peut être en alliage moulé ou en métal usiné.

Le système comporte un cylindre de frein de parking et/ou de frein de service configuré pour agir sur des organes de freinage du véhicule, tel que par exemple des disques de frein ou directement sur les roues du véhicule, avec le dispositif d'actionnement qui est configuré pour verrouiller en configuration de freinage de parking le cylindre de frein.

L'invention a aussi pour objet, sous un deuxième aspect, un véhicule ferroviaire comportant un système de freinage ferroviaire tel que décrit ci-dessus, qui est configuré pour agir sur des organes mécaniques du véhicule et dont le dispositif de déverrouillage est configuré pour déverrouiller le dispositif d'actionnement par l'actionnement d'un mécanisme de commande.

### Brève description des figures

On va maintenant poursuivre l'exposé de l'invention par la description d'exemples de réalisation, donnée ci-après à titre illustratif et non limitatif, en référence aux dessins annexés.
La figure 1 illustre schématiquement un système de freinage ferroviaire selon l'invention.
La figure 2 illustre partiellement et en perspective le système de freinage ferroviaire de la figure 1.
La figure 3 est une vue en coupe transversale partielle repérée III-III sur la figure 2.
La figure 4 est une vue en coupe médiane longitudinale d'un mécanisme de commande du système de freinage ferroviaire des figures 1 à 3, dans une première configuration dite de sécurité.
La figure 5 est une vue similaire à celle de la figure 4, montrant le mécanisme de commande dans une deuxième configuration dite de maintenance.
La figure 6 illustre en coupe une première variante de réalisation du mécanisme de commande, dans sa première configuration dite verrouillée.
La figure 7 est une vue similaire à celle de la figure 6, montrant le mécanisme de commande dans sa deuxième configuration dite déverrouillée.
La figure 8 illustre en coupe une deuxième variante de réalisation du mécanisme de commande, dans sa première configuration dite verrouillée.
La figure 9 est une vue similaire à celle de la figure 8, montrant le mécanisme de commande dans sa deuxième configuration dite déverrouillée.

### Description détaillée

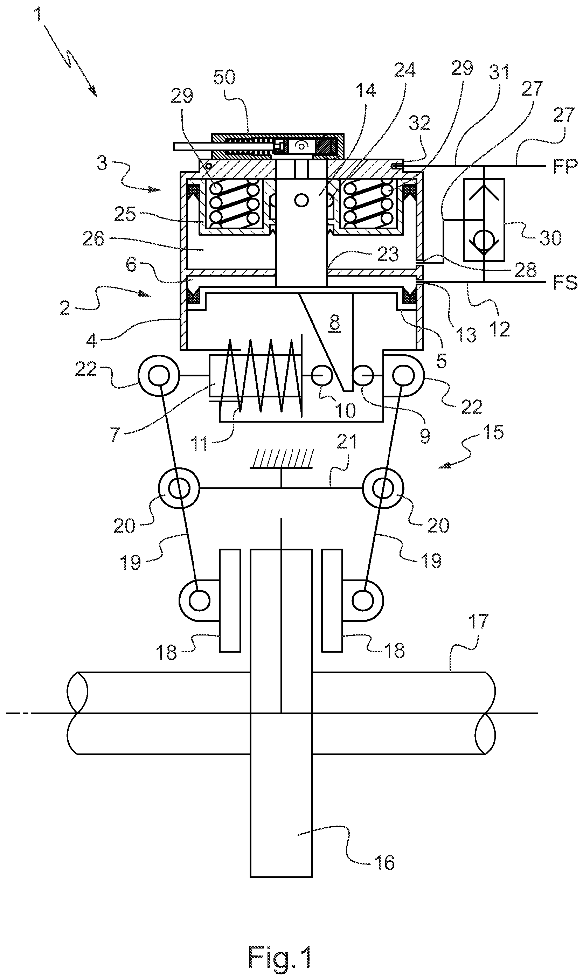

La figure 1 illustre schématiquement un système de freinage ferroviaire 1 comportant cylindre de frein ferroviaire 2 auquel est accouplé un dispositif d'actionnement 3, ci-après actionneur, configuré pour assurer une fonction dite par exemple de frein de parking ou de frein de secours.

Le cylindre de frein 2 comporte un corps 4, un piston de freinage 5 mobile selon une première direction axiale à l'intérieur du corps 4 et délimitant avec ce dernier une chambre de pression 6 du côté de laquelle est accouplé l'actionneur 3.

Le cylindre de frein 2 comporte en outre une tige de poussée 7 mobile suivant une deuxième direction axiale perpendiculaire à la première direction axiale.

Le piston de freinage 5 est attaché à une pièce de coin 8 présentant par exemple ici une section triangulaire.

La pièce de coin 8 est configurée pour coopérer avec une première butée à roulement 9 reliée au corps 4 du cylindre de frein 2 et avec une deuxième butée à roulement 10 reliée à la tige de poussée 7.

Le cylindre de frein 2 comporte un organe élastique 11, ici un ressort, qui est disposé entre le corps 4 et la tige de poussée 7 afin de rappeler la deuxième butée à roulement 10 contre la pièce de coin 8.

Le système de freinage ferroviaire 1 est pourvu d'un réseau de cheminement de fluide et en particulier ici d'une première conduite 12 raccordant la chambre de pression 6 par un premier orifice d'entrée 13 à une première source de fluide sous pression notée FS sur la figure 1.

Le système de freinage ferroviaire 1 est en outre pourvu d'une timonerie de freinage 15 sur laquelle vient agir le cylindre de frein 2, et la timonerie de frein ferroviaire 15 est configurée pour agir sur un disque de frein 16 monté par exemple sur un essieu 17 de véhicule ferroviaire, ou directement sur la roue à freiner. Le disque de frein 16 est ici vu de profil.

La timonerie 15 comporte de manière classique deux patins de freinage 18 disposés de part et d'autre du disque de frein 16 et qui, en l'absence de sollicitation, sont à l'écart du disque de frein 16 et lors d'une action de freinage, sont sollicités par la timonerie 15 contre le disque de frein 16 pour ralentir et/ou stopper le disque de frein 16 par friction.

La timonerie 15 comporte à cet effet deux leviers 19 au moins partiellement rigides comportant chacun un bras supérieur et un bras inférieur solidaires, chaque levier 19 étant monté en rotation autour d'un axe 20 solidaire d'un châssis 21 du véhicule ferroviaire. Le bras inférieur de chaque levier 19 est relié à l'un des patins de freinage 18. Le bras supérieur de chaque levier 19 est quant à lui relié à une articulation 22.

Le cylindre de frein 2 est monté entre les deux articulations 22, le corps 4 étant solidaire de l'une de ces articulations 22 et l'extrémité de la tige de poussée 7 étant solidaire de l'autre articulation 22.

On va décrire brièvement le fonctionnement du cylindre de frein 2 en supposant à ce stade que l'actionneur 1, pas encore décrit, est désactivé.

Sur la figure 1, le cylindre de frein 2 est représenté en position d'attente. Dans cette position, la pression de fluide FS n'est pas exercée, c'est-à-dire que la première conduite 12 est par exemple mise à la pression atmosphérique. La chambre de pression 6 présente alors un volume minimal, avec le ressort 11 qui sollicite la deuxième butée à roulement 10 en direction de la première butée à roulement 9 provoquant la montée de la pièce de coin 8 et du piston de freinage 5.

Lorsque le cylindre de frein 2 est en position de freinage, la première conduite 12 reçoit le fluide sous pression FS qui remplit la chambre de pression 6 et sollicite le piston de freinage 5 et la pièce de coin 8 vers le bas, ce qui a pour effet d'écarter l'une de l'autre les première et deuxième butées 9 et 10 et donc les articulations 22. Le volume de la chambre de pression 6 est maximal dans cette position. Dès que la pression du fluide FS est supprimée de la première conduite 12, le cylindre de frein 2 revient à sa position d'attente sous l'effet du ressort 11 en chassant le fluide de la chambre de pression 6.

S'agissant de l'actionneur 3, il comporte un corps formé avec le corps 4 du cylindre de frein 2, lequel peut comporter plusieurs parties assujetties mécaniquement et solidairement les unes aux autres.

L'actionneur 3 présente une ouverture 23 ménagée en vis-à-vis du piston de freinage 5 et débouchant dans la chambre de pression 6 du cylindre de frein 2.

L'ouverture 21 est ici une ouverture circulaire recevant partiellement à coulissement un dispositif de verrouillage 14, ici à billes 24, de l'actionneur 3.

L'actionneur 3 comporte un piston complémentaire de freinage 25 monté mobile dans le corps 4 et délimitant avec ce dernier une chambre complémentaire de pression 26 au travers de laquelle s'étend le dispositif de verrouillage 14.

Le réseau de cheminement de fluide comporte une deuxième conduite 27 raccordant la chambre complémentaire de pression 26 par un deuxième orifice d'entrée 28 à une deuxième source de fluide sous pression notée FP sur la figure 1.

Le piston complémentaire de freinage 25 est mobile entre une position haute et une position basse. La vue schématique de la figure 1 montre le piston 24 en position haute.

Le piston complémentaire de freinage 25 comporte en son centre un orifice traversé par le dispositif de verrouillage 14. L'étanchéité entre le dispositif de verrouillage 16 et le piston 24 est assurée par un joint.

Des organes élastiques 29, formés dans le présent exemple par des ressorts, sollicitent en permanence le piston complémentaire de freinage 25 vers sa position basse.

En fonctionnement normal, la chambre complémentaire de pression 26 est alimentée en fluide sous pression FP de sorte que le piston complémentaire de freinage 25 est en position haute. En cas de défaut par exemple sur les conduites pneumatiques, ou en cas de freinage d'urgence, ou encore d'application du frein de parking etc., la chambre complémentaire de pression 26 n'est plus alimentée et les ressorts 29 poussent le piston complémentaire de freinage 25 en position basse, générant un déplacement du dispositif de verrouillage 16 et un blocage du piston de freinage 5 dans une position de freinage par exemple de parking.

Le système de freinage ferroviaire 1 est en outre pourvu d'un organe de distribution pneumatique, formé ici par une valve dite d'anti-superposition 30 qui est configurée pour empêcher l'application à la fois du frein de parking et du frein de service, risquant de détériorer le cylindre de frein 2 et notamment la tige de poussée 7.

En particulier, la valve d'anti-superposition 30 est d'une part traversée par la deuxième conduite 27 alimentée normalement en fluide sous pression FP et d'autre raccordée à la première conduite 12 alimentée normalement en fluide sous pression FS.

Ainsi, si la première conduite 12 est alimentée en fluide sous pression FS et que la deuxième conduite 27 est mise à l'atmosphère ou tout au moins n'est pas alimentée par une pression suffisante pour maintenir les ressorts 29, alors c'est le fluide sous pression FS qui chemine dans la valve d'anti-superposition 30 et qui vient maintenir les ressorts 29 pour empêcher que ceux-ci n'appliquent un effort de freinage complémentaire à celui déjà appliqué par le fluide sous pression FS sur le piston de freinage 5.

L'actionneur 1 comporte en outre un dispositif de déverrouillage 50 qui est configuré pour repousser le dispositif de verrouillage 14 ou, autrement dit, pour le faire passer d'une position de verrouillage à une position de déverrouillage.

Le dispositif de déverrouillage 50 est lui aussi alimenté en fluide sous pression FP par une troisième conduite 31 au travers d'un troisième orifice 32 ménagé dans le corps 4, avec la troisième conduite qui est raccordée à la deuxième conduite 27.

Le dispositif de déverrouillage 50 est aussi appelé un dispositif, ou valve, de rétention.

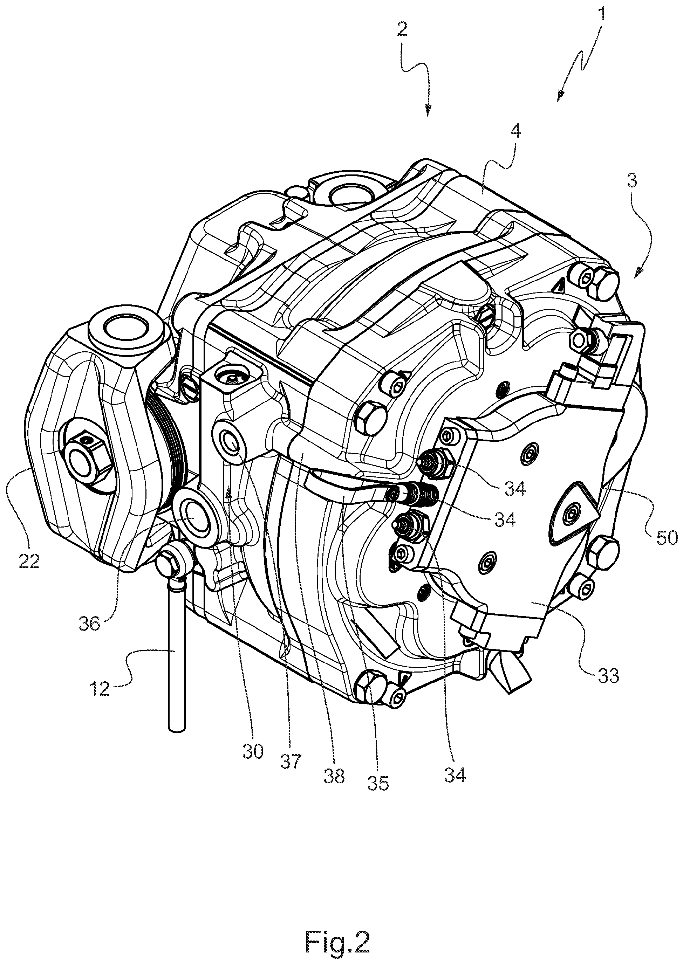

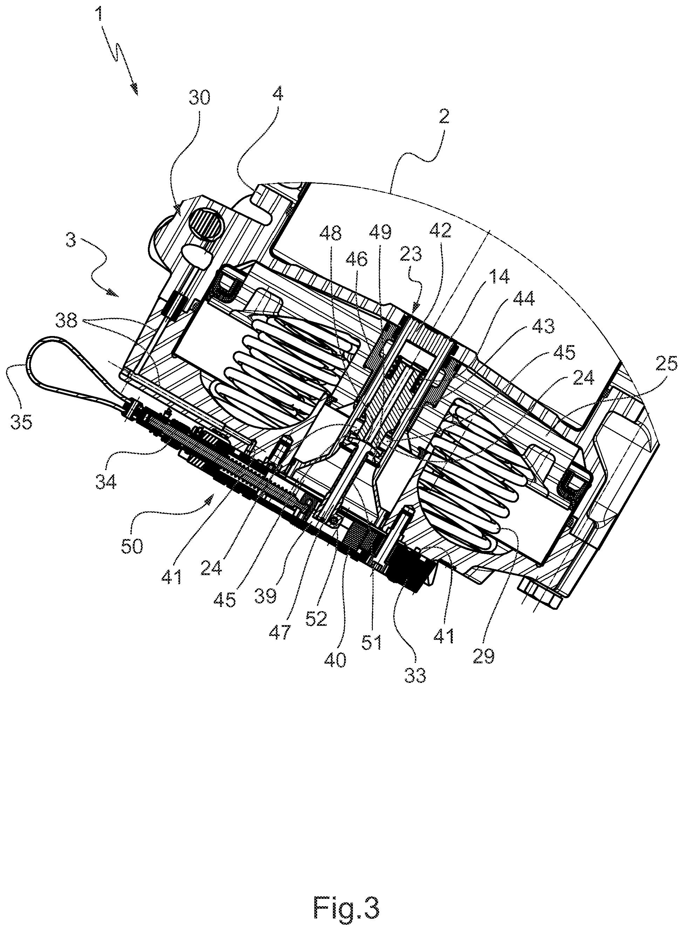

La figure 2 illustre en perspective le système de freinage ferroviaire 1 et en particulier le cylindre de frein 2 et l'actionneur 3 et la figure 3 une coupe partielle montrant plutôt l'actionneur 3.

Le dispositif de déverrouillage 50 est pourvu d'un boîtier 33 distinct et assujetti mécaniquement sur le corps 4 du cylindre de frein 2

Le dispositif de déverrouillage 50 est pourvu en outre d'une pluralité de tiges de commande 34 montées partiellement en saillie du boîtier 33 et à laquelle sont raccordés à une extrémité des câbles de commande (non représentés) et une poignée de commande 35.

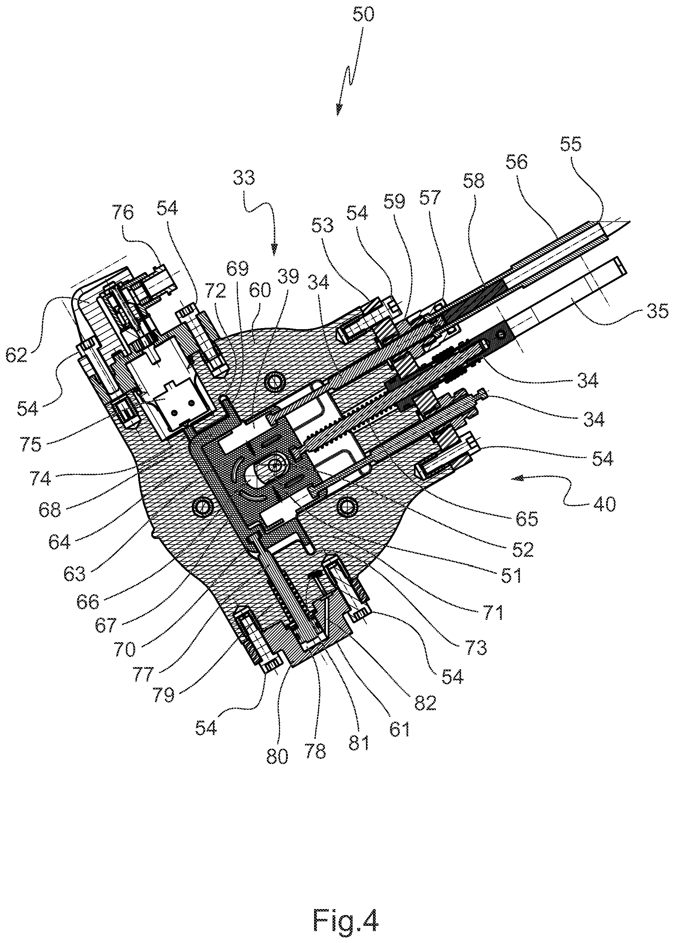

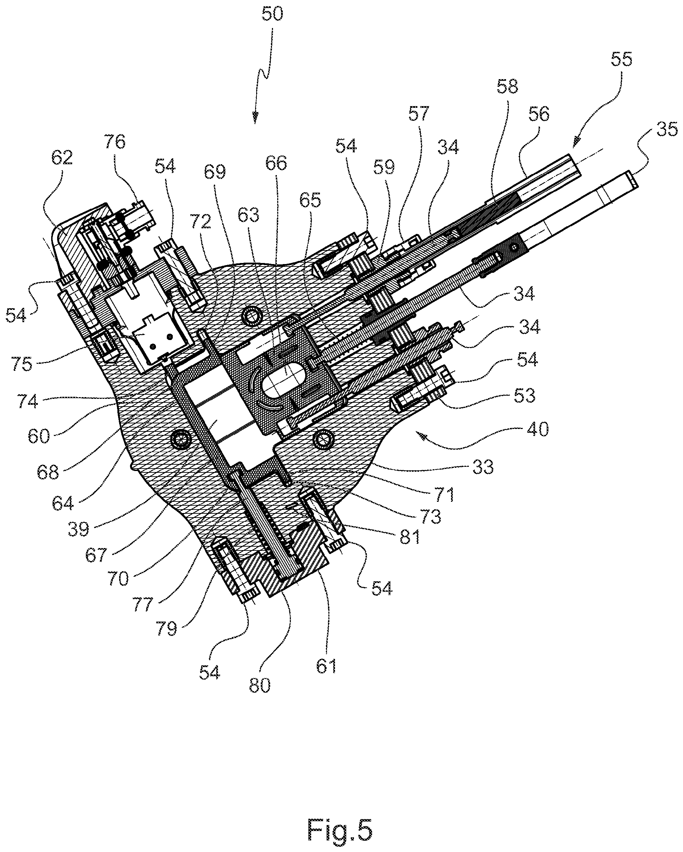

Le dispositif de déverrouillage 50 est pourvu d'un mécanisme de commande 40 logé dans un espace 39 ménagé dans le boîtier 33 et assujetti mécaniquement à une extrémité opposée des tiges de commande 34 (voir ci-après plus en détail en référence aux figures 4 et 5).

Sur les figures 2 et 3 est visible aussi la première conduite 12 alimentant le cylindre de frein 2 en fluide sous pression FS, et la valve d'anti-superposition 30 qui est ici directement formée dans le corps 4.

La valve d'anti-superposition 30 comporte notamment un orifice d'entrée de fluide sous pression FS 36 et un orifice d'entrée de fluide sous pression FP 37, ainsi qu'un conduit interne de cheminement 38 ménagé dans le corps 4 pour faire cheminer le fluide sous pression FP vers le dispositif de déverrouillage 50 (figure 2).

Le conduit interne de cheminement 38 présente une première portion s'étendant dans le corps 4 selon la première direction axiale et une deuxième portion s'étendant aussi dans le corps 4 selon la deuxième direction axiale perpendiculaire à la première direction, jusqu'à déboucher dans une gorge de communication fluidique 41 ménagée à la surface du corps 4 contre le boîtier 33 du dispositif de déverrouillage 50 (figure 3).

Dans l'exemple illustré, la gorge de communication fluidique 41 est circulaire.

La figure 3 montre aussi plus en détail le dispositif de verrouillage 14 de l'actionneur 1.

En particulier, dans l'exemple illustré, le dispositif de verrouillage 14 comporte un manchon de poussée 42 s'ajustant dans l'ouverture 23 de manière étanche grâce à un joint torique, ainsi qu'un coulisseau 43 disposé à l'intérieur du manchon de poussée 42 de manière à être mobile entre une position haute et une position basse. Il est ici représenté en position haute, correspondant à la position de verrouillage, tandis que sa position basse correspond à la position de déverrouillage.

Le coulisseau 43 est en permanence sollicité vers sa position de verrouillage par un ressort 44 disposé entre le coulisseau 43 et le manchon de poussée 42.

L'actionneur 1 comporte en outre un organe d'accrochage 46 ici formé d'un seul tenant avec le piston complémentaire de freinage 25 et qui enveloppe au moins partiellement le manchon de poussée 42. Cet organe d'accrochage 46 comporte ici une première portion annulaire entourant le manchon de poussée 42 et présentant un diamètre interne semblable à ce dernier de sorte qu'il puisse à coulisser le long de ce dernier. L'organe d'accrochage 46 comporte également une seconde portion annulaire présentant un diamètre interne supérieur de sorte à former un renfoncement, les deux portions étant reliées l'une à l'autre par une portion intermédiaire évasée et formant du côté interne, une portée torique.

L'actionneur 1 comporte plusieurs billes 24 disposées chacune au moins partiellement dans le manchon de poussée 42 entre le coulisseau 43 et l'organe d'accrochage 46. Les billes 24 sont configurées pour occuper une position saillante correspondant à la position de verrouillage du coulisseau 43 ainsi qu'une position rétractée correspondant à la position de déverrouillage du coulisseau 43.

Lorsque le coulisseau 43 est en position de verrouillage, l'organe d'accrochage 46 est apte à entrainer axialement le manchon de poussée 42 par l'intermédiaire de ces billes 24. A l'inverse, lorsque le coulisseau 43 est en position de déverrouillage, l'organe d'accrochage 46 est axialement désaccouplé du manchon de poussée 42.

Le coulisseau 43 comporte à son extrémité opposée au ressort 44 une surface latérale qui est par exemple formée de gorges d'accueil 45 s'étendant chacune suivant l'axe de ce coulisseau 43.

On notera que fonctionnellement, le dispositif de déverrouillage 50 est configuré pour repousser le coulisseau 43 dans le manchon de poussée 42 en comprimant le ressort 44.

Le dispositif de déverrouillage 50 est donc adapté à entrainer le coulisseau 43 de sa position de verrouillage à sa position de déverrouillage, en tirant sur la poignée 35 et donc sur la tige de commande 34.

En particulier, dans l'exemple illustré, le dispositif de déverrouillage 50 comporte un levier 47 formé par une tige présentant à une extrémité une embase bombée 48 dont la concavité est tournée vers le coulisseau 43 et de laquelle s'étend la tige. L'embase bombée 48 est ici disposée et maintenue entre le sommet du coulisseau 43 et une butée annulaire 49, tandis que la tige s'étend depuis l'embase bombée 48 et est logée dans un fourreau 51 dont une extrémité est logée dans l'espace 39, ou logement, du boîtier 33 et par laquelle le fourreau 54 est articulé par un pivot 52.

C'est donc le mécanisme de commande 40 qui est configuré pour actionner le levier 47 en articulant le fourreau 51 au niveau du pivot 52.

En effet, lorsque l'agent de maintenance souhaite stopper l'effort de freinage exercé par l'actionneur 1, il lui suffit d'actionner la poignée 35 de sorte à déplacer la tige de commande 34, cette dernière provoquant le déplacement du fourreau 51 et donc du levier 47. L'embase bombée 48 du levier 47 étant retenue contre la butée annulaire 49, le fourreau 51 pivote autour du pivot 52, ou tourillon, tandis que le levier 47 coulisse dans ce fourreau 51 et que l'embase bombée 48 bascule de sorte qu'une partie de cette dernière vient exercer un effort sur le sommet du coulisseau 43 qui est repoussé dans sa position de déverrouillage.

On va maintenant décrire plus en détail le mécanisme de commande 40 et plus généralement le boîtier 33 du dispositif de déverrouillage 50 en référence aux figures 4 et 5.

Le boîtier 33 présente un corps 60 qui est ici réalisé au moins partiellement en matière plastique.

Le boîtier 33 présente une platine 53, par exemple réalisée en plastique ou en métal, et assujettie mécaniquement sur une face supérieure du corps 60 par l'intermédiaire d'organes de fixation 54, par exemple du type vis.

Les tiges de commande 34, au nombre de trois dans l'exemple illustré, saillent au travers d'orifices ménagés dans la platine 53.

Sur une des tiges de commande 34, située au centre, est assujettie mécaniquement la poignée 35.

Sur une autre des tiges de commande 34, située sur un côté, est assujetti mécaniquement un câble de commande 55 formé d'une âme 58 au moins partiellement enveloppée par une gaine 56 et présentant à une extrémité libre un organe de montage 57, du type écrou, configuré pour être assujetti mécaniquement sur un organe complémentaire de montage 59 monté sur la platine 53. Un tel câble de commande 55 peut être configuré pour tirer et/ou pousser la tige de commande 34 associée.

Sur l'autre des tiges de commande 34, située sur un côté opposé, peut être assujetti mécaniquement un câble de commande du même type que celui décrit ci-dessus.

Le mécanisme de commande 40 présente en outre un module de pilotage 61 réalisé ici au moins partiellement en métal et assujetti mécaniquement sur un côté du corps 60 du boîtier 33 par l'intermédiaire d'organes de fixation 54, par exemple du type vis.

Dans l'exemple illustré, le mécanisme de commande 40 présente également un module de détection 62 réalisé au moins partiellement en plastique ou en métal, et ici aussi assujetti mécaniquement sur un côté opposé du corps 60 du boîtier 33 par l'intermédiaire d'organes de fixation 54, par exemple du type vis.

L'espace 39, ou logement, est ici réalisé dans le corps 60 du boîtier 33.

Les tiges de commande 34 s'étendent dans le corps 60 et saillent dans cet espace 39.

Le mécanisme de commande 40 est pourvu d'un organe de commande, ici une chape 63 qui est montée mobile selon une direction dans l'espace 39 dans le corps 60 du boîtier 33, entre une position dite de sécurité (figure 4), correspondant à un verrouillage du cylindre de frein, et une position dite de maintenance (figure 5) correspondant à un déverrouillage du cylindre de frein.

La chape 63 présente un orifice central 66 configuré pour recevoir le fourreau 51 du levier au niveau du pivot 52 pour l'articulation de ce dernier.

Dans la position de sécurité de la chape 63, le fourreau 51 du levier du dispositif de deverrouillage 50 est reçu dans l'orifice central 66 de la chape 63.

Dans la position de maintenance de la chape 63, cette dernière fait pivoter le fourreau 51 du levier du dispositif de deverrouillage 50, qui peut alors sortir de l'orifice central 66 de la chape 63.

Les tiges de commande 34 sont assujettis mécaniquement à la chape 63.

Le mécanisme de commande 40 présente au moins un organe de rappel 65 monté ici autour de la tige de commande 34 située au centre, entre la platine 53 et la chape 63.

L'organe de rappel 65 est ici formé par un ressort configuré pour solliciter la chape 63 dans sa position dite de sécurité.

Ainsi, lorsque l'agent de maintenance tire sur la poignée 35, la chape 63 est entraînée en translation dans le logement 39 vers sa position de maintenance et, lorsque l'agent de maintenance lâche la poignée 35, la chape 63 est sollicitée en sens inverse et es entraînée en translation dans le logement 39 vers sa position de sécurité, sauf si la chape 63 est retenue en position de maintenance.

En particulier, le mécanisme de commande 40 est en outre pourvu d'un organe de blocage, ici un verrou en forme de U 64 logé dans l'espace 39 du corps 60 du boîtier 33.

Le verrou 64 est monté mobile en translation selon une direction perpendiculaire à la direction de déplacement de la chape 63 dans l'espace 39 dans le corps 60.

Le verrou 64 présente une paroi de fond 67 de laquelle saillent une première branche 68 ayant à son extrémité libre un premier rebord 69 pouvant être logé dans une première cavité 72 ménagée dans le corps 60, et une deuxième branche 70 s'étendant en regard de la première branche 68 et ayant à son extrémité libre un second rebord 71 pouvant être logé dans une seconde cavité 73 ménagée dans le corps 60.

Le verrou 64 présente en outre une protubérance 74 en saillie de la paroi de fond 67 et/ou de la première branche 68 et s'étendant jusqu'au module de détection 62.

Le module de détection 62 présente au moins un capteur 75 logé dans le corps 60 et configuré pour détecter la présence ou non de la protubérance 74 et une prise de raccordement 76 pour la récupération de l'information, par exemple électrique, représentative de la position du verrou 64 dans le mécanisme de commande 40.

Le module de pilotage 61 présente quant à lui un piston de pilotage 77 s'étendant au moins partiellement dans le corps 60 du boîtier 33 et assujetti mécaniquement à une extrémité à la deuxième branche 70 du verrou 64.

Le module de pilotage 61 présente en outre un organe de rappel 79 formé ici par un ressort monté autour du piston de pilotage 77 et configuré pour solliciter à distance de l'espace 39 du corps 33, vers un capot externe 80 du module de pilotage 61.

Le capot externe 80 délimite avec le piston de pilotage 77 une chambre de pilotage 78 qui est alimentée en fluide sous pression FP par un orifice de pilotage 81 ménagé dans le corps 60 du boîtier 33 et qui se trouve, d'une part en communication fluidique avec la gorge 41 ménagée dans le corps 4 du cylindre de frein 2 et, d'autre part en communication fluidique avec la chambre de pilotage 78 via une conduite de pilotage 82 cheminant dans le corps 60 et dans le capot externe 80.

La chape 63 et le verrou 64 sont ici dimensionnés de sorte que la chape 63 peut être reçue au moins partiellement dans un espace délimité entre les première et deuxième branches 68 et 70 du verrou 64 en U.

En particulier, lorsque la chambre de pilotage 78 est alimentée (figure 4), le piston de pilotage 77 est sollicité de sorte qu'il pousse le verrou 64 pour que la chape 63 puisse s'y loger.

La protubérance 74 est alors au contact du capteur 75 du module de détection 62.

Le premier rebord 69 est logé dans la première cavité 72.

Dans cette configuration de sécurité, le fourreau 51 du levier du dispositif de deverrouilage 50 peut être reçu dans l'orifice central 66 de la chape 63.

Si la chambre de pilotage 78 n'est plus alimentée, alors le dispositif de deverrouillage 50 passe en configuration de verrouillage (voir plus haut).

Ni la chape 63 ni le verrou 64 ne sont déplacés, et le piston de pilotage 77 reste en position dans l'espace 69.

Si l'agent de maintenance vient tirer sur la poignée 35, ou sur un câble de commande 55, la chape 63 est entraînée en translation vers la platine 53, sortant de l'espace délimité entre les première et deuxième branches 68 et 70 du verrou 64 en U.

Le verrou 64 est libéré et entrainé en translation par le piston de pilotage 77 lui-même sollicité par le ressort 79.

Dans cette configuration de maintenance, le premier rebord 69 sort au moins partiellement de la première cavité 72 pour venir se positionner sous la chape 63, tandis que le deuxième rebord 71 est logé dans la deuxième cavité 73.

La chape 63 est alors bloquée en position, vers la platine, même lorsque l'agent de maintenance lâche la poignée 35 ou actionne un câble de commande 55 en sens inverse.

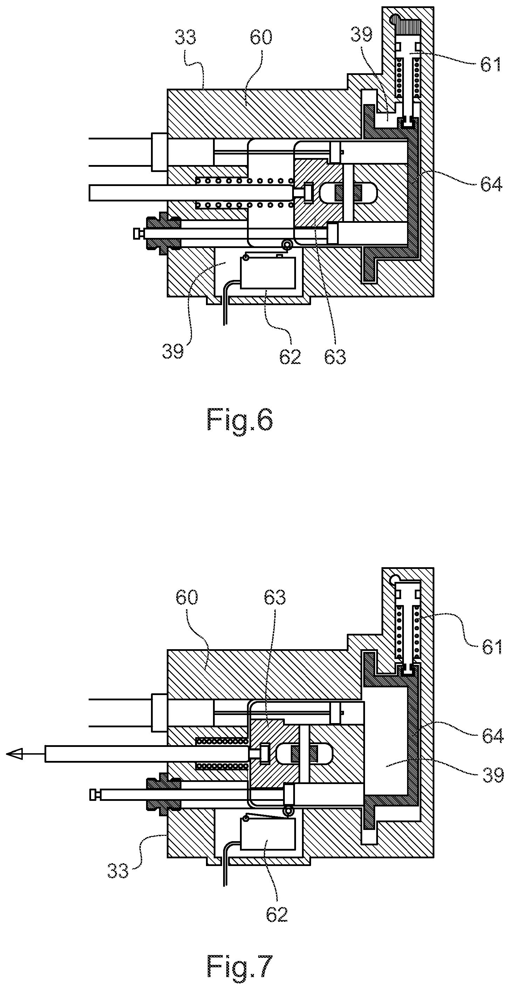

Dans une première variante de réalisation illustrée sur les figures 6 et 7, le module de détection 62 et le module de pilotage 61 sont directement intégrés dans l'espace 39 dans le corps 60 du boîtier 33. Le module de détection 62 est en outre configuré pour être au contact de la chape 63 et donc détecter la position de cette dernière plutôt que la position du verrou 64.

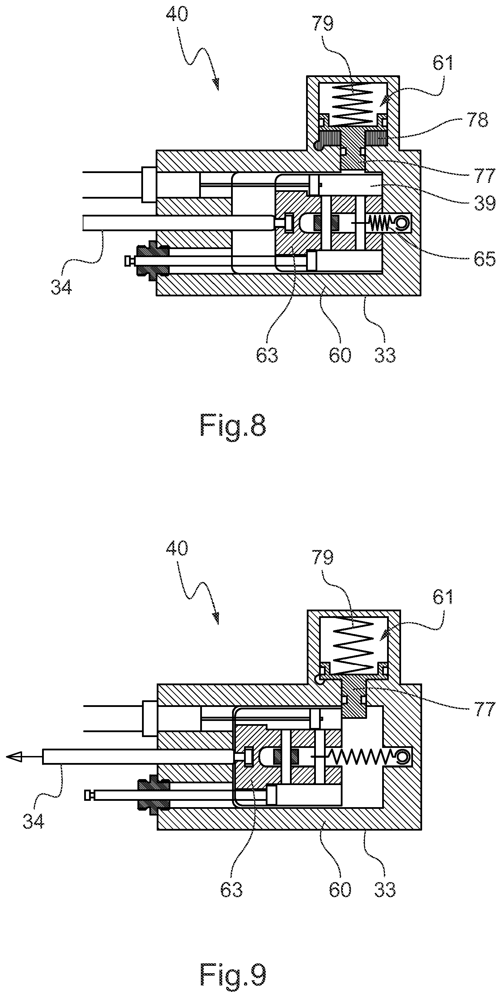

Dans une deuxième variante de réalisation illustrée sur les figures 8 et 9, le mécanisme de commande 40 est dépourvu de module de détection. Au surplus, le verrou est formé directement par le piston de pilotage 77 qui, lorsqu'il est déployé, vient bloquer en position la chape 63. La chambre de pression de pilotage 78 et l'organe de rappel 79 sont en outre inversés. Autrement dit, en présence de fluide sous pression FP, le piston de pilotage 77 est rétracté, ou reculé, et ne bloque pas la chape 63, tandis qu'en l'absence de fluide sous pression FP, le piston de pilotage 77 est déployé, ou avancé, et bloque la chape 63. En outre, sur les figures 8 et 9, l'organe de rappel 65 n'est pas monté autour de la tige de commande 34 mais à l'opposé, dans l'espace 39 entre la chape 63 et le corps 60 du boîtier 33.

Dans une variante non illustrée, le boîtier du dispositif de déverrouillage peut être en métal plutôt qu'en plastique, et le capot du module de pilotage peut être en plastique plutôt qu'en métal.

Plus généralement, l'invention ne se limite pas aux exemples décrits et représentés. L'invention est limitée uniquement dans le cadre des revendications ci-jointes.

## Revendications

1. Système de freinage ferroviaire pour un véhicule ferroviaire, comportant un cylindre de frein (2) configuré pour agir sur des organes de freinage (18) du véhicule ferroviaire, un dispositif d'actionnement (14) configuré pour verrouiller le cylindre de frein dans une position de freinage et un dispositif de déverrouillage (50) configuré pour déverrouiller le dispositif d'actionnement par l'actionnement d'un mécanisme de commande (40), le mécanisme de commande comporte un organe de commande (63) mobile en translation selon une direction, **caractérisé en ce que** le mécanisme de commande (40) est logé dans un boîtier (33) du dispositif de déverrouillage assujetti sur le cylindre de frein, l'organe de commande étant configuré pour coopérer avec le dispositif d'actionnement, et un organe de blocage (64, 77) monté mobile en translation selon une direction perpendiculaire à la direction de déplacement de l'organe de commande et logé dans le boîtier du dispositif de déverrouillage, le mécanisme de commande étant configuré de sorte, lorsque le dispositif d'actionnement est dans une position de verrouillage du cylindre de frein et que l'organe de commande est sollicité et déplacé vers une position de maintenance dans laquelle il est configuré pour faire passer le dispositif d'actionnement dans une position de déverrouillage, l'organe de blocage est sollicité et déplacé dans une position dans laquelle il bloque en position l'organe de commande.

2. Système de freinage ferroviaire selon la revendication 1, **caractérisé en ce que** le dispositif de déverrouillage (50) comporte au moins une tige de commande (34) assujettie par une extrémité à l'organe de commande (63) et montée partiellement en saillie du boîtier (33) de sorte à être sollicitée depuis l'extérieur du boîtier par exemple par une poignée (35) et/ou un câble de commande (55).

3. Système de freinage ferroviaire selon l'une des revendications 1 et 2, **caractérisé en ce que** l'organe de commande est formé par une chape (63) montée mobile dans un espace (39) ménagé dans un corps (60) du boîtier (33), entre une position de sécurité, correspondant à un verrouillage du cylindre de frein (2), et une position de maintenance correspondant à un déverrouillage du cylindre de frein, avec la chape qui présente un orifice central (66) configuré pour recevoir un levier (47) du dispositif d'actionnement (14).

4. Système de freinage ferroviaire selon l'une quelconque des revendications 1 à 3, **caractérisé en ce que** l'organe de blocage est formé par un verrou en forme de U (64) logé dans un espace (39) ménagé dans un corps (60) du boîtier (33), avec le verrou qui présente une paroi de fond (67) de laquelle saillent une première branche (68) ayant à son extrémité libre un premier rebord (69) pouvant être logé dans une première cavité (72) ménagée dans le corps du boîtier, et une deuxième branche (70) s'étendant en regard de la première branche et ayant à son extrémité libre un second rebord (71) pouvant être logé dans une seconde cavité (73) ménagée dans le corps du boîtier.

5. Système de freinage ferroviaire selon les revendications 3 et 4, **caractérisé en ce que** la chape (63) et le verrou (64) sont dimensionnés de sorte que la chape est reçue au moins partiellement dans un espace délimité entre les première et deuxième branches (68, 70) du verrou.

6. Système de freinage ferroviaire selon l'une quelconque des revendications 1 à 5, **caractérisé en ce que** le mécanisme de commande (40) présente un module de pilotage (61) pourvu d'un piston de pilotage (77) s'étendant au moins partiellement dans un corps (60) du boîtier (33), d'une chambre de pilotage (78) alimentée en fluide sous pression (FP) par un orifice de pilotage (81) ménagé dans le corps du boîtier et qui se trouve, d'une part en communication fluidique avec une gorge (41) ménagée dans un corps (4) du cylindre de frein (2) et, d'autre part en communication fluidique avec la chambre de pilotage via une conduite de pilotage (82) cheminant au moins dans le corps du boîtier.

7. Système de freinage ferroviaire selon les revendications 3 à 6, **caractérisé en ce que** lorsque la chambre de pilotage (78) est alimentée, le piston de pilotage (77) est sollicité de sorte qu'il pousse le verrou (64) pour que la chape (63) puisse s'y loger, le premier rebord (69) est logé dans la première cavité (72), et dans cette position de sécurité de la chape, le levier (47) du dispositif d'actionnement (14) est reçu partiellement dans l'orifice central (66) de la chape.

8. Système de freinage ferroviaire selon les revendications 3 à 6, **caractérisé en ce que** lorsque la chambre de pilotage (78) n'est plus alimentée et que la chape (63) est entraînée en translation vers sa position de maintenance, elle sort de l'espace délimité entre les première et deuxième branches (68, 70) du verrou (64), lequel est libéré et entrainé en translation par le piston de pilotage (77) lui-même sollicité par un organe de ressort (79) et, dans cette position de maintenance, le premier rebord (69) sort au moins partiellement de la première cavité (72) pour venir se positionner sous la chape tandis que le deuxième rebord (71) est logé dans la deuxième cavité (73), bloquant ainsi la chape en position.

9. Système de freinage ferroviaire selon l'une quelconque des revendications 6 à 8, **caractérisé en ce que** le piston de pilotage (77) est assujetti mécaniquement à une extrémité à la deuxième branche (70) du verrou (64) et le module de pilotage (61) présente en outre un organe de rappel (79) monté autour du piston de pilotage (77) et configuré pour le solliciter à distance de l'espace (39) du corps (60) du boîtier (33), vers un capot externe (80) du module de pilotage, lequel capot externe délimite avec le piston de pilotage la chambre de pilotage (78) qui est alimentée en fluide sous pression (FP).

10. Système de freinage ferroviaire selon l'une quelconque des revendications 1 à 9, **caractérisé en ce que** le mécanisme de commande (40) présente un module de détection (62) pourvu d'au moins un capteur (75) logé dans le corps (60) du boîtier (33) et configuré pour détecter la position de l'organe de commande (63) et/ou de l'organe de blocage (64).

11. Système de freinage ferroviaire selon l'une quelconque des revendications 1 à 10, **caractérisé en ce qu'**il comporte un cylindre de frein de parking et/ou de frein de service configuré pour agir sur des organes de freinage du véhicule, tel que par exemple des disques de frein ou directement sur les roues du véhicule, avec le dispositif d'actionnement (50) qui est configuré pour verrouiller en configuration de freinage de parking le cylindre de frein.

12. Véhicule ferroviaire comportant un système de freinage ferroviaire selon l'une quelconque des revendications 1 à 11, qui est configuré pour agir sur des organes mécaniques (18) du véhicule et dont le dispositif de déverrouillage (50) est configuré pour déverrouiller le dispositif d'actionnement (14) par l'actionnement d'un mécanisme de commande (40).

## Patentansprüche

1. Schienenbremssystem für ein Schienenfahrzeug, das einen Bremszylinder (2) aufweist, der so ausgebildet ist, dass er auf Bremselemente (18) des Schienenfahrzeugs wirkt, eine Betätigungsvorrichtung (14), die so ausgebildet ist, dass sie den Bremszylinder in einer Bremsposition verriegelt, und eine Entriegelungsvorrichtung (50), die so ausgebildet ist, dass sie die Betätigungsvorrichtung durch Betätigung eines Steuermechanismus (40) entriegelt, wobei der Steuermechanismus ein in einer Richtung translatorisch bewegliches Steuerelement (63) aufweist, **dadurch gekennzeichnet, dass** der Steuermechanismus (40) in einem Gehäuse (33) der am Bremszylinder festgelegten Entriegelungsvorrichtung untergebracht ist, wobei das Steuerelement so ausgebildet ist, dass es mit der Betätigungsvorrichtung zusammenwirkt, und ein in einer Richtung senkrecht zu der Bewegungsrichtung des Steuerelements translatorisch beweglich angebrachtes und in dem Gehäuse der Entriegelungsvorrichtung untergebrachtes Blockierelement (64, 77), wobei der Steuermechanismus so ausgebildet ist, dass, wenn sich die Betätigungsvorrichtung in einer Verriegelungsposition des Bremszylinders befindet und das Steuerelement beaufschlagt und in eine Wartungsposition bewegt wird, in der es so ausgebildet ist, dass es die Betätigungsvorrichtung in eine Entriegelungsposition bringt, das Blockierelemen beaufschlagt und in eine Position bewegt wird, in der es das Steuerelement in Position blockiert.

2. Schienenbremssystem nach Anspruch 1, **dadurch gekennzeichnet, dass** die Entriegelungsvorrichtung (50) mindestens eine Steuerstange (34) aufweist, die an einem Ende an dem Steuerelement (63) festgelegt und teilweise aus dem Gehäuse (33) hervorstehend angebracht ist, so dass sie von außerhalb des Gehäuses, beispielsweise durch einen Griff (35) und/oder ein Steuerkabel (55), beaufschlagt wird.

3. Schienenbremssystem nach einem der Ansprüche 1 und 2, **dadurch gekennzeichnet, dass** das Steuerelement durch einen Gabelkopf (63) gebildet ist, der beweglich in einem Raum (39) angebracht ist, der in einem Körper (60) des Gehäuses (33) zwischen einer Sicherheitsposition, die einer Verriegelung des Bremszylinders (2) entspricht, und einer Wartungsposition, die einer Entriegelung des Bremszylinders entspricht, eingerichtet ist, mit dem Gabelkopf, der eine zentrale Öffnung (66) aufweist, die zur Aufnahme eines Hebels (47) der Betätigungsvorrichtung (14) ausgebildet ist.

4. Schienenbremssystem nach einem der Ansprüche 1 bis 3, **dadurch gekennzeichnet, dass** das Blockierelement durch einen U-förmigen Riegel (64) gebildet ist, der in einem Raum (39) untergebracht ist, der in einem Körper (60) des Gehäuses (33) eingerichtet ist, mit dem Riegel, der eine Bodenwand (67) aufweist, aus der ein erster Schenkel (68) hervorsteht, der an seinem freien Ende eine erste Vorsprung (69) aufweist, die in einem ersten Hohlraum (72) unterbringbar ist, der in dem Körper des Gehäuses eingerichtet ist, und einen zweiten Schenkel (70), der sich dem ersten Schenkel zugewandt erstreckt und an seinem freien Ende eine zweite Vorsprung (71) aufweist, die in einem zweiten Hohlraum (73) unterbringbar ist, der in dem Körper des Gehäuses eingerichtet ist.

5. Schienenbremssystem nach den Ansprüchen 3 und 4, **dadurch gekennzeichnet, dass** der Gabelkopf (63) und der Riegel (64) so bemessen sind, dass der Gabelkopf mindestens teilweise in einem begrenzten Raum zwischen dem ersten und zweiten Schenkel (68, 70) des Riegels aufgenommen wird.

6. Schienenbremssystem nach einem der Ansprüche 1 bis 5, **dadurch gekennzeichnet, dass** der Steuermechanismus (40) ein Steuermodul (61) aufweist, das mit einem Steuerkolben (77) versehen ist, der sich mindestens teilweise in einem Körper (60) des Gehäuses (33) erstreckt, mit einer Steuerkammer (78), die durch eine Steueröffnung (81), die in dem Körper des Gehäuses eingerichtet ist, mit Druckfluid (FP) versorgt wird und die sich einerseits in Fluidkommunikation mit einer Nut (41), die in einem Körper (4) des Bremszylinders (2) eingerichtet ist, und andererseits in Fluidkommunikation mit der Steuerkammer über eine mindestens in dem Körper des Gehäuses verlaufende Steuerleitung (82) befindet.

7. Schienenbremssystem nach den Ansprüchen 3 bis 6, **dadurch gekennzeichnet, dass**, wenn die Steuerkammer (78) versorgt wird, der Steuerkolben (77) so beaufschlagt wird, dass er den Riegel (64) drückt, damit der Gabelkopf (63) darin aufgenommen werden kann, die erste Vorsprung (69) in dem ersten Hohlraum (72) untergebracht ist und in dieser Sicherheitsposition des Gabelkopfes der Hebel (47) der Betätigungsvorrichtung (14) teilweise in der zentralen Öffnung (66) des Gabelkopfes aufgenommen wird.

8. Schienenbremssystem nach den Ansprüchen 3 bis 6, **dadurch gekennzeichnet, dass**, wenn die Steuerkammer (78) nicht mehr versorgt wird und der Gabelkopf (63) in translatorisch in seine Wartungsposition verlagert wird, er aus dem zwischen dem ersten und zweiten Schenkel (68, 70) des Riegels (64) begrenzten Raum austritt, der freigegeben und durch den Steuerkolben (77) translatorisch angetrieben wird, der seinerseits von einem Federelement (79) beaufschlagt wird, und in dieser Wartungsposition die erste Vorsprung (69) mindestens teilweise aus dem ersten Hohlraum (72) heraustritt, um sich unter dem Gabelkopf zu positionieren, während die zweite Vorsprung (71) in dem zweiten Hohlraum (73) untergebracht ist, wodurch der Gabelkopf in Position blockiert wird.

9. Schienenbremssystem nach einem der Ansprüche 6 bis 8, **dadurch gekennzeichnet, dass** der Steuerkolben (77) an einem Ende mechanisch mit dem zweiten Schenkel (70) des Riegels (64) festgelegt ist und das Steuermodul (61) ferner ein Rückstellelement (79) aufweist, das um den Steuerkolben (77) herum angebracht und so ausgebildet ist, dass es diesen beabstandet von dem Raum (39) des Körpers (60) des Gehäuses (33) zu einer äußeren Abdeckung (80) des Steuermoduls beaufschlagt, wobei die äußere Abdeckung mit dem Steuerkolben die Steuerkammer (78) begrenzt, die mit Druckfluid (FP) versorgt wird.

10. Schienenbremssystem nach einem der Ansprüche 1 bis 9, **dadurch gekennzeichnet, dass** der Steuermechanismus (40) ein Erkennungsmodul (62) aufweist, das mit mindestens einem Sensor (75) versehen ist, der in dem Körper (60) des Gehäuses (33) untergebracht und so ausgebildet ist, dass er die Position des Steuerelements (63) und/oder des Blockierelements (64) erkennt.

11. Schienenbremssystem nach einem der Ansprüche 1 bis 10, **dadurch gekennzeichnet, dass** es einen Feststellbremszylinder und/oder einen Betriebsbremszylinder aufweist, der so ausgebildet ist, dass er auf Bremselemente des Fahrzeugs, wie beispielsweise Bremsscheiben oder direkt auf die Räder des Fahrzeugs, mit der Betätigungsvorrichtung (50) wirkt, die so ausgebildet ist, dass sie in der Feststellbremskonfiguration den Bremszylinder verriegelt.

12. Schienenfahrzeug, das ein Schienenbremssystem nach einem der Ansprüche 1 bis 11 aufweist, das so ausgebildet ist, dass es auf mechanische Elemente (18) des Fahrzeugs wirkt, und dessen Entriegelungsvorrichtung (50) so ausgebildet ist, dass sie die Betätigungsvorrichtung (14) durch Betätigung eines Steuermechanismus (40) entriegelt.

## Claims

1. A railway braking system for a railway vehicle, including a brake cylinder (2) configured to act on braking members (18) of the railway vehicle, an actuation device (14) configured to lock the brake cylinder in a braking position and an unlocking device (50) configured to unlock the actuation device by actuation of a control mechanism (40), the control mechanism includes a control member (63) movable in translation according to one direction, **characterised in that** the control mechanism (40) is housed in a casing (33) of the unlocking device connected to the brake cylinder, the control member being configured to cooperate with the actuation device, and a blocking member (64, 77) mounted movable in translation according to a direction perpendicular to the direction of movement of the control member and housed in the casing of the unlocking device, the control mechanism being configured so that, when the actuation device is in a locking position of the brake cylinder and the control member is urged and moved towards a maintenance position in which it is configured to make the actuation device pass into an unlocking position, the blocking member is urged and moved into a position in which it blocks the control member in position.

2. The railway braking system according to claim 1, **characterised in that** the unlocking device (50) includes at least one control rod (34) connected at one end to the control member (63) and mounted so as to partially project from the casing (33) so as to be urged from the outside of the casing for example by a handle (35) and/or a control cable (55).

3. The railway braking system according to one of claims 1 and 2, **characterised in that** the control member is formed by a clevis (63) movably mounted in a space (39) formed in a body (60) of the casing (33), between a safety position, corresponding to locking of the brake cylinder (2), and a maintenance position corresponding to unlocking of the brake cylinder, with the clevis which has a central orifice (66) configured to receive a lever (47) of the actuation device (14).

4. The railway braking system according to any one of claims 1 to 3, **characterised in that** the blocking member is formed by a U-shaped lock (64) housed in a space (39) formed in a body (60) of the casing (33), with the lock which has a bottom wall (67) from which project a first branch (68) having at its free end a first flange (69) which can be housed in a first cavity (72) formed in the body of the casing, and a second branch (70) extending opposite the first branch and having at its free end a second flange (71) which can be housed in a second cavity (73) formed in the body of the casing.

5. The railway braking system according to claims 3 and 4, **characterised in that** the clevis (63) and the lock (64) are sized so that the clevis is received at least partially in a space delimited between the first and second branches (68, 70) of the lock.

6. The railway braking system according to any one of claims 1 to 5, **characterised in that** the control mechanism (40) has a control module (61) provided with a control piston (77) extending at least partially in a body (60) of the casing (33), a control chamber (78) supplied with pressurised fluid (FP) via a control orifice (81) formed in the body of the casing and which is located, on the one hand in fluid communication with a groove (41) formed in a body (4) of the brake cylinder (2) and, on the other hand, in fluid communication with the control chamber via a control line (82) running at least in the body of the casing.

7. The railway braking system according to claims 3 to 6, **characterised in that** when the control chamber (78) is supplied, the control piston (77) is urged so that it pushes the lock (64) so that the clevis (63) can be received therein, the first flange (69) is housed in the first cavity (72), and in this safety position of the clevis, the lever (47) of the actuation device (14) is partially received in the central orifice (66) of the clevis.

8. The railway braking system according to claims 3 to 6, **characterised in that** when the control chamber (78) is no longer supplied and the clevis (63) is driven in translation towards its maintenance position, it comes out from the space delimited between the first and second branches (68, 70) of the lock (64), which is released and driven in translation by the control piston (77) itself urged by a spring member (79) and, in this maintenance position, the first flange (69) comes out at least partially from the first cavity (72) to be positioned under the clevis whereas the second flange (71) is housed in the second cavity (73), thereby blocking the clevis in position.

9. The railway braking system according to any one of claims 6 to 8, **characterised in that** the control piston (77) is mechanically connected at one end to the second branch (70) of the lock (64) and the control module (61) further has a return member (79) mounted around the control piston (77) and configured to urge it away from the space (39) of the body (60) of the casing (33), towards an outer cover (80) of the control module, which outer cover delimits with the control piston the control chamber (78) which is supplied with pressurised fluid (FP).

10. The railway braking system according to any one of claims 1 to 9, **characterised in that** the control mechanism (40) has a detection module (62) provided with at least one sensor (75) housed in the body (60) of the casing (33) and configured to detect the position of the control member (63) and/or of the blocking member (64).

11. The railway braking system according to any one of claims 1 to 10, **characterised in that** it includes a parking brake and/or service brake cylinder configured to act on braking members of the vehicle, such as for example brake discs or directly on the wheels of the vehicle, with the actuation device (50) which is configured to lock the brake cylinder in the parking brake configuration.

12. A railway vehicle including a railway braking system according to any one of claims 1 to 11, which is configured to act on mechanical members (18) of the vehicle and the unlocking device (50) of which is configured to unlock the actuation device (14) by actuation of a control mechanism (40).
